# EUROPÄISCHE PATENTSCHRIFT

(11) **EP 3 490 339 B1**
(45) Veröffentlichungstag und Bekanntmachung des Hinweises auf die Patenterteilung: **09.09.2020**
(21) Anmeldenummer: 18200977.9
(22) Anmeldetag: 17.10.2018
(51) Int. Cl.: H05B 6/12

(54) **TOPFERKENNUNGSSENSOR FÜR EIN INDUKTIONSKOCHFELD UND INDUKTIONSKOCHFELD**
INDUCTION COOKING HOB AND POT DETECTION SENSOR FOR AN INDUCTION COOKING HOB
CAPTEUR DE DÉTECTION DE RÉCIPIENT POUR UNE PLAQUE DE CUISSON À INDUCTION ET PLAQUE DE CUISSON À INDUCTION

(30) Priorität: 28.11.2017 DE 102017221341
(43) Veröffentlichungstag der Anmeldung: 29.05.2019
(73) Patentinhaber: E.G.O. Elektro-Gerätebau GmbH, 75038 Oberderdingen (DE)
(72) Erfinder: Benz, Karl-Heinz, 75031 Eppingen (DE); Frank, Marcus, 75056 Sulzfeld (DE); Parker, Daniel, 75203 Königsbach-Stein (DE); Schmid, Dennis, 76703 Kraichtal (DE); Volk, Martin, 75038 Oberderdingen (DE)
(74) Vertreter: Patentanwälte Ruff, Wilhelm, Beier, Dauster & Partner mbB

(56) Entgegenhaltungen:
- EP-A1- 2 833 697
- EP-A1- 3 026 981
- EP-A1- 3 316 663
- DE-A1-102006 043 182
- DE-A1-102011 083 125

## Beschreibung

Die Erfindung betrifft einen Topferkennungssensor für ein Induktionskochfeld sowie ein Induktionskochfeld mit mindestens einem derartigen Topferkennungssensor.

Aus der EP 3026981 A1 sind Topferkennungssensoren bekannt, die in einem Induktionskochfeld eingesetzt werden können. Dabei sind kleine Sensorspulen vorgesehen, die über die Fläche des Induktionskochfelds verteilt sind. Sie liegen in Bereichen zwischen zwei benachbarten Induktionsheizspulen, teilweise aber auch genau über einer Induktionsheizspule. Durch die Vielzahl der Sensorspulen kann, gegebenenfalls zusammen mit den Induktionsheizspulen selbst, erkannt werden, ob ein Kochgefäß auf das Induktionskochfeld aufgestellt worden ist, und falls dies der Fall ist, wo es aufgestellt worden ist.

Des Weiteren ist es beispielsweise aus der EP 2141415 A1 bekannt, Leuchtmittel bzw. Beleuchtungselemente unterhalb einer Kochfeldplatte eines Induktionskochfelds vorzusehen. Diese können unterschiedliche Informationen anzeigen, gegebenenfalls auch nur dekorativen Zweck aufweisen.

Aus der EP 3316663 A1 ist ein weiteres Induktionskochfeld bekannt, das unter einer Kochfeldplatte längliche Topferkennungssensoren aufweist. Diese Topferkennungssensoren sind streifenförmig ausgebildet. Vorteilhaft sind die Topferkennungssensoren als kapazitive Sensoren ausgebildet.

Aus der EP 2833697 A1 ist ein nochmals weiteres Induktionskochfeld bekannt, bei dem die Position eines auf eine Kochfeldplatte aufgesetzten Topfes erkannt werden kann. Hierfür können Induktionsheizspulen, mit denen der Topf beheizt werden soll, verwendet werden, da sie induktive Sensoren bilden.

Aus der DE 102011083125 A1 ist ein Induktionskochfeld bekannt mit mehreren Induktionsheizspulen und einer Kochfeldplatte. Die Induktionsheizspulen können dabei entweder rund oder trapezförmig ausgebildet sein.

Der Erfindung liegt die Aufgabe zugrunde, einen eingangs genannten Topferkennungssensor sowie ein eingangs genanntes Induktionskochfeld zu schaffen, mit denen Probleme des Standes der Technik gelöst werden können und es insbesondere möglich ist, die Position bzw. den Aufsetzort von Kochgefäßen auf dem Induktionskochfeld einfach, präzise und zuverlässig erkennen zu können.

Gelöst wird diese Aufgabe durch einen Topferkennungssensor mit den Merkmalen des Anspruchs 1 sowie durch ein Induktionskochfeld mit den Merkmalen des Anspruchs 13. Vorteilhafte sowie bevorzugte Ausgestaltungen der Erfindung sind Gegenstand der weiteren Ansprüche und werden im Folgenden näher erläutert. Dabei werden manche der Merkmale nur für den Topferkennungssensor oder nur für das Induktionskochfeld beschrieben. Sie sollen jedoch unabhängig davon sowohl für den Topferkennungssensor als auch für das Induktionskochfeld selbständig und unabhängig voneinander gelten können. Der Wortlaut der Ansprüche wird durch ausdrückliche Bezugnahme zum Inhalt der Beschreibung gemacht.

Es ist vorgesehen, dass der Topferkennungssensor eine Luftspule aufweist, die mindestens zwei Windungen aufweist, vorteilhaft mehr, beispielsweise zehn bis fünfzig Windungen. Der Topferkennungssensor weist einen Träger für die Luftspule auf, wobei dieser Träger gleichzeitig das stützende Bauteil für den gesamten Topferkennungssensor sein kann. Die Luftspule muss dazu aber nicht direkt auf den Träger aufgebracht sein.

Erfindungsgemäß beträgt eine Länge der Luftspule mindestens das Fünffache einer Breite der Luftspule, so dass diese also als länglich und insbesondere als länglich und schmal ausgebildet sein kann. Dadurch kann der Topferkennungssensor insgesamt ebenfalls schmal ausgebildet sein und sehr gut in einem Induktionskochfeld mit mindestens einer Induktionsheizspule eingebaut sein, insbesondere dann, wenn das Induktionskochfeld mehrere Induktionsheizspulen aufweist und ein solcher Topferkennungssensor zwischen benachbarten Induktionsheizspulen vorgesehen ist. Er bedeckt nämlich dann nur eine geringe Fläche und stört sozusagen beim Einbau nicht, insbesondere stört er Anordnung und Funktion der Induktionsheizspulen nicht oder nur möglichst wenig. Häufig weisen diese nämlich einen seitlichen Abstand zueinander auf, auch damit jeweils aufgestellte Kochgefäße sich nicht gegenseitig behindern. In diesem Abstand kann vorteilhaft ein solcher Topferkennungssensor platziert werden.

Der Vorteil eines Topferkennungssensors mit einer Luftspule, die länglich ist, ist der, dass er im Vergleich zu einem Topferkennungssensor aus dem Stand der Technik mit runder Luftspule nicht nur sozusagen an einem Punkt oder in einem sehr kleinen Bereich erkennen bzw. überwachen kann, ob über ihm ein Kochgefäß aufgestellt ist. Vielmehr kann dann in einem deutlich größeren Bereich bzw. eben entlang der Länge der Luftspule überwacht werden, ob ein Kochgefäß darüber aufgesetzt ist.

In Ausgestaltung der Erfindung ist der Träger flach, insbesondere ein Flachmaterial wie beispielsweise eine Leiterplatte oder ein ähnlicher dünner Träger. Die Windungen der Luftspule verlaufen bevorzugt parallel zum Träger. Die Ausgestaltung eines Trägers als flach bzw. eben weist den Vorteil auf, dass er dann möglichst wenig Bauraum und Bauhöhe beansprucht. Auch der genannte Windungsverlauf trägt hierzu bei. Somit kann der Topferkennungssensor sogar zwischen Induktionsheizspule und Unterseite einer Kochfeldplatte angeordnet werden, ohne die Bauhöhe des Induktionskochfelds nachteilig zu verändern bzw. ohne dass die Induktionsheizspule mehr Abstand von einer Unterseite der Kochfeldplatte aufweisen muss als notwendig. Des Weiteren kann ein solcher Träger noch für weitere Bauteile oder Bauteilgruppen verwendet werden, die auch zur Ansteuerung und/oder Auswertung einer Topferkennung dienen können. Alternativ können sie für andere Funktionen vorgesehen sein, wie nachfolgend noch im Detail erläutert werden wird.

In einer vorteilhaften Ausgestaltung der Erfindung sind die Luftspule und/oder der Träger gerade. Dies eignet sich vor allem dann, wenn die Induktionsheizspulen des Induktionskochfelds eine Außenform eines Mehrecks aufweisen bzw. zumindest teilweise geradlinige Außenform oder Außenseiten haben. Dann kann entlang dieser geraden Außenseiten ein solcher Topferkennungssensor mit sozusagen angepasster Form angeordnet sein.

Alternativ können, wie leicht vorstellbar ist, die Luftspule und/oder der Träger gebogen ausgebildet sein. Insbesondere bietet sich hier eine Teilkreisform an als gebogene Form, welche besonders gut dann verwendet werden kann, wenn eine Induktionsheizspule des Kochfelds abgerundete bzw. kreisförmige Form an mindestens einem Teil ihrer Außenseite aufweist. Auch hier kann dann der Verlauf der Luftspule bzw. des Topferkennungssensors an den Verlauf der Außenkante oder äußersten Windung der Induktionsheizspule angepasst werden.

In möglicher Ausgestaltung der Erfindung kann das Verhältnis von Länge zu Breite der Luftspule sozusagen noch schmaler sein, so dass eine Länge der Luftspule zwischen dem Achtfachen und dem Zwölffachen ihrer Breite beträgt. Durch die geringe Breite stören die Luftspule bzw. der Topferkennungssensor nicht zwischen zwei Induktionsheizspulen, es kann aber dennoch ein relativ großer bzw. zumindest langer Bereich dahingehend überwacht werden, ob ein Kochgefäß aufgesetzt ist. Insbesondere kann der Topferkennungssensor samt Luftspule so lang sein oder beinahe so lang sein, wie eine Längsseite einer Induktionsheizspule lang ist, die hin zu einer benachbarten Induktionsheizspule weist. Dies gilt natürlich vor allem für den Fall von gerade ausgebildeten Luftspulen bzw. Topferkennungssensoren.

Eine Länge der Luftspule kann maximal 30 cm oder maximal 25 cm betragen. Insbesondere kann eine Luftspule maximal 20 cm lang sein, so dass sie vor allem auch in derartigen Induktionskochfeldern eingesetzt werden kann, die mehr als die üblichen vier oder sechs Induktionsheizspulen aufweisen.

Eine Breite der Luftspule sollte maximal 3 cm betragen, insbesondere maximal 1 cm oder 2 cm. Eine gewisse Mindestbreite, beispielsweise 3 mm bis 5 mm, wird als vorteilhaft und nahezu notwendig angesehen, damit eine Topferkennungsfunktion der Luftspule gut genug ist. Wegen der beengten Platzverhältnisse in einem Induktionskochfeld sollte ihre Breite aber nicht zu groß sein und eben wie vorgenannt möglichst nicht über 2 cm bis 3 cm liegen. Da eine Luftspule vorteilhaft nicht die Induktionsheizspule oder ihre Außenwindungen überdeckt, sollte sie in dem Zwischenraum zwischen den Außenwindungen von benachbarten Induktionsheizspulen angeordnet sein und sozusagen ausreichend Platz finden, weswegen sie eben nicht zu breit sein sollte. Ansonsten könnte eine Beeinträchtigung der Funktion der Induktionsheizspule auftreten, möglicherweise auch der Funktion der Luftspule selbst.

In nochmals weiterer Ausgestaltung der Erfindung weist der Träger vorteilhaft zwei gegenüberliegende Flachseiten auf, insbesondere wenn es ein flacher und ebener Träger ist. Der Träger sollte nur auf derjenigen Flachseite mit Bauteilen bestückt sein, auf der auch die Luftspule angeordnet ist. Dann ist es möglich, dass die andere Flachseite frei ist von Bauteilen. Ist der Träger eine Leiterplatte odgl., dann können zwar auf beiden Flachseiten elektrische Kontakte und/oder Kontaktbahnen, Kontaktfelder und/oder Durchkontaktierungen vorgesehen sein. Damit der Träger aber relativ flach auf eine Unterlage aufgelegt werden kann, beispielsweise auf ein vorgenanntes Tragblech, das die Induktionsheizspulen trägt, oder sogar auf die Induktionsheizspulen oder deren Träger selbst, sollte die Flachseite, welche die Unterseite des Topferkennungssensors bildet, eben möglichst frei von abstehenden Bauteilen sein. Da die andere Flachseite mit der Luftspule ohnehin ein abstehendes und nach oben ragendes Bauteil aufweist, können hier auch noch zusätzliche Bauteile vorgesehen sein. Dadurch erfolgt dann keine unnötige übertriebene Vergrößerung der Bauhöhe.

In Ausgestaltung der Erfindung ist es möglich, dass ein Topferkennungssensor auf seinem einzigen Träger nicht nur eine Luftspule aufweist, sondern mehrere, insbesondere zwei Luftspulen. Diese mehreren Luftspulen können dann in Verlängerung zueinander auf dem Träger angeordnet sein, vorteilhaft sind sie identisch. Sie können also entweder entlang einer Geraden oder entlang eines Bogens oder Kreises verlaufen. Ihr Abstand zueinander kann zwischen 1 cm und 5 cm liegen, vorteilhaft entspricht der Abstand in etwa einer Breite der Luftspulen oder des Trägers. Auch wenn beide Luftspulen elektrisch separat angesteuert und steuerungstechnisch ausgewertet werden müssen, ist so doch ein Montageaufwand verringert, weil mit einem Montagevorgang gleich zwei Luftspulen installiert werden können. Dasselbe gilt für den elektrischen Anschluss.

In Ausgestaltung der Erfindung ist am Topferkennungssensor mindestens ein Temperatursensor vorgesehen. Dieser kann an einer oberen Seite des Topferkennungssensors angeordnet sein, beispielsweise möglichst weit bzw. ganz weit oben am obersten Punkt des Topferkennungssensors, insbesondere an einem Gehäuse odgl.. So kann er an einer Unterseite einer darüber verlaufenden Abdeckung bzw. Kochfeldplatte anliegen und deren Temperatur erfassen bzw. überwachen, wie man es von Temperatursensoren über Induktionsheizspulen kennt. Alternativ kann er an einer unteren Seite des Topferkennungssensors angeordnet sein, insbesondere am Träger, und beispielsweise die Temperatur eines Tragblechs odgl. darunter erfassen, auf dem der Topferkennungssensor und die Induktionsheizspulen aufgelegt sind.

Des Weiteren ist es möglich, dass der Topferkennungssensor einen Bus-Controller aufweist zur Auswertung der Luftspule und möglicherweise zur Ansteuerung von weiteren Funktionsbauteilen auf dem Träger. Dies wird nachfolgend noch näher erläutert.

Ein vorgenannter Bus-Controller kann vorteilhaft auch dann vorgesehen sein, wenn ein Topferkennungssensor Leuchtmittel aufweist. Derartige Leuchtmittel können allgemein vorteilhaft auf derselben Flachseite des Trägers angeordnet sein wie die Luftspule. Als Leuchtmittel bieten sich LED an, insbesondere SMD-LED, die auf Kontaktfelder bzw. Leiterbahnen auf dem Träger aufgebracht sind. Die Leuchtmittel können alternativ auch an der Luftspule selbst angeordnet sein, beispielsweise aufgeklebt sein, so dass sie dann von der Luftspule sozusagen getragen werden.

In vorteilhafter Ausgestaltung der Erfindung sind die Leuchtmittel von der Luftspule umgeben, da üblicherweise innerhalb der Luftspule ein genügend breiter Raum vorhanden ist, siehe die vorherigen Ausführungen. Die Leuchtmittel können dann zusätzlich zur Funktion der Topferkennung, gleichzeitig völlig unabhängig davon, Informationen an eine Bedienperson anzeigen oder optische Effekte am Induktionskochfeld erzielen oder eine Begrenzung von Induktionsheizspulen darstellen. Dann kann das Aufstellen von Kochgefäßen auf die Kochfeldplatte erheblich verbessert werden. Die Luftspule umgibt also bevorzugt die Leuchtmittel bzw. verläuft um diese herum.

Für eine optisch ansprechende Erscheinung der Leuchtmittel sind vorteilhaft Diffusormittel vorgesehen, um eine diffuse Lichterscheinung zu erzeugen bzw. um eine Leuchtwirkung des mindestens einen Leuchtmittels, welches üblicherweise eher punktförmig leuchtet, zu vergleichmäßigen. Besonders bevorzugt kann dabei für sämtliche Leuchtmittel an einem Träger ein einziges und durchgehendes Diffusormaterial vorgesehen sein. So kann eine durchgehende und möglichst gleichmäßige Leuchterscheinung erreicht werden, die in etwa die Länge der Luftspule oder des Topferkennungssensors aufweist. Es hat sich nämlich im Rahmen der Erfindung als vorteilhaft herausgestellt, wenn nicht nur die Luftspule für eine Erkennung eines aufgestellten Kochgefäßes im Bereich zwischen zwei benachbarten Induktionsheizspulen angeordnet ist und dabei auch über eine größere Länge verläuft, insbesondere über nahezu die gesamte Länge dieses Zwischenbereichs. Zusätzlich ist dieser Bereich auch noch interessant für eine optische Markierung für eine Bedienperson, so dass sie möglicherweise ein Kochgefäß zentrisch auf die mittels Leuchterscheinung markierte Induktionsheizspule aufsetzen kann. Dann kann auf bekannte dauerhafte Kochstellenmarkierungen auf der Oberseite der Kochfeldplatte verzichtet werden. Neben einer Markierung von Kochstellen kann mit einer Leuchterscheinung der Leuchtmittel eben auch eine Information an eine Bedienperson des Kochfelds gegeben werden, beispielsweise bezüglich Zustand des Kochfelds bzw. einer Kochstelle oder eines darauf aufgestellten Kochgefäßes.

Es ist möglich, dass ein vorgenanntes Diffusormittel als Gehäuse ausgebildet ist oder zumindest einen Teil eines Gehäuses bildet, unter Umständen kann auch ein gesamtes Gehäuse aus diesem Material bestehen, evtl. mit einer Beschichtung versehen. Dieses Gehäuse ist vor allem über dem Leuchtmittel vorgesehen bzw. ist ein Gehäuse für das mindestens eine Leuchtmittel. Es kann als Abdeckung kastenartig ausgebildet sein. Bevorzugt verläuft das Gehäuse nicht nur über dem Leuchtmittel, sondern auch seitlich um das Leuchtmittel herum. Nach unten kann ein Gehäuse geöffnet sein und gleichzeitig kann durch das Aufstellen oder Aufsetzen des Gehäuses auf den flachen Träger erreicht werden, dass kein Licht auf ungewünschte Art von dem Leuchtmittel nach außen abstrahlt.

In vorteilhafter weiterer Ausgestaltung der Erfindung kann eine Luftspule mit ihren Windungen auf bzw. um ein vorgenanntes Gehäuse oder um eine Abdeckung für das mindestens eine Leuchtmittel gewickelt werden. Die Luftspule liegt dann nicht direkt auf dem Träger auf, sondern liegt eben direkt an dem Gehäuse oder an der Abdeckung an, die dann wiederum von dem Träger getragen ist. Dadurch ist es möglich, wenn der Topferkennungssensor ein solches Gehäuse oder eine solche Abdeckung aufweist, dass dieses die Luftspule nicht nur nicht stört sondern vielmehr ermöglicht, dass die Luftspule gut und praxistauglich aufgewickelt und somit angeordnet sein kann. Des Weiteren kann die Luftspule dann relativ hoch über dem Träger angeordnet sein, wenn dies gewünscht ist, und somit nahe an der Unterseite der Kochfeldplatte und möglichst nahe an einem darüber auf der Kochfeldplatte aufgestellten Kochgefäß. Dies verbessert die Genauigkeit einer Topferkennung. Ein weiterer Vorteil des Aufwickelns der Luftspule auf ein solches Gehäuse oder eine solche Abdeckung besteht darin, dass dies zum Einen relativ einfach möglich ist und zum Anderen eine genau vorgegebene Wicklungsart und Wicklungsform für die Luftspule erreicht werden kann. Würde die reine Luftspule auf einem flachen Träger oder einer Leiterplatte befestigt werden müssen, so müsste sie auf einen sonstigen Wicklungskern aufgewickelt werden, der dann auf dem Träger befestigt wird. Alternativ müsste die Luftspule nach dem Aufwickeln von dem Kern abgenommen werden und in sich fixiert sein, beispielsweise durch Tauchlack, Klebeband oder Klebstoff. Damit verbleibt immer noch das Problem der stabilen und dauerhaften Befestigung auf dem Träger, wozu weitere Bauteile bzw. Funktionselemente oder Klebstoff benötigt würden. Dies fällt weg mit einem vorgenannten Gehäuse bzw. einer Abdeckung, auf die die Luftspule aufgewickelt werden kann. An einer lateralen Außenseite können das Gehäuse oder die Abdeckung auch speziell ausgebildet sein, um ein Aufwickeln der Luftspule möglichst zu vereinfachen. Dies ist aber aus dem Stand der Technik bekannt und braucht hier nicht weiter erläutert zu werden.

Bei einer Ausgestaltung eines erfindungsgemäßen Induktionskochfelds kann vorgesehen sein, dass der Topferkennungssensor bzw. vor allem die Luftspule keine Induktionsheizspule bzw. keine Windung einer Induktionsheizspule überdecken, insbesondere nicht deren äußerste Windung. So lässt sich die Funktionsweise beider Spulen optimieren. Dennoch sollten der Topferkennungssensor bzw. vor allem die Luftspule relativ nah zu einer äußersten Windung der Induktionsheizspule angeordnet sein, insbesondere einen Abstand von weniger als 4 cm aufweisen. Der Abstand kann besonders bevorzugt zwischen 2 mm und 1 cm liegen. Dann kann der Abstand zweier benachbarter Induktionsheizspulen relativ gering sein und der Topferkennungssensor bzw. dessen Luftspule dennoch dazwischen verlaufen. Bei derartigen Induktionskochfeldern, auch gemäß der eingangs genannten EP 3026981 A1, kann nämlich auch vorteilhaft vorgesehen sein, dass ein Kochgefäß, insbesondere ein relativ großes Kochgefäß, bewusst über zwei Induktionsheizspulen aufgestellt wird und von beiden gleichzeitig beheizt wird. Eine entsprechende korrekte Aufstellung oder Bedeckung kann mittels der Luftspule als Topferkennungssensor erkannt werden. Des Weiteren sollte dann aber der Abstand der benachbarten Induktionsheizspulen nicht zu groß sein, um eine gewünschte Leistungsdichte und eine über die Fläche des Bodens des Kochgefäßes möglichst gleichmäßig verteilte Heizleistung zu ermöglichen ohne eine zu große Lücke zwischen den Induktionsheizspulen aufgrund des Abstands.

Ein Induktionskochfeld kann beispielsweise mindestens zwei x drei Induktionsheizspulen aufweisen, vorteilhaft mindestens zwei Reihen von links nach rechts mit jeweils mindestens drei Induktionsheizspulen. Dort wo zwei Induktionsheizspulen zueinander benachbart sind, sind in den Zwischenbereichen derartige Topferkennungssensoren vorgesehen, insbesondere identische Topferkennungssensoren. Die Induktionsheizspulen sind dann vorteilhaft rechteckig oder angenähert rechteckig bzw. weisen zumindest teilweise gerade Außenseiten auf. Dabei kann vorgesehen sein, dass an den nach außen gerichteten Längsseiten der Induktionsheizspulen, die nicht zu einer benachbarten Induktionsheizspule hin liegen, keine Topferkennungssensoren vorgesehen sind. Hier kann in aller Regel eine Bedienperson selbst erkennen, wenn ein Kochgefäß sehr stark über diese Außenseiten der Induktionsheizspule übersteht, da sie in aller Regel nahe zu einer lateralen oder hinteren Außenkante der Kochfeldplatte angeordnet sind und dann das Kochgefäß entsprechend darüber überstehen würde. Dies kann von einer Bedienperson ja intuitiv vermieden werden. Zur Vorderkante hin gilt dasselbe, auch wenn hier möglicherweise ein breiterer Bereich der Kochfeldplatte als Bedieneinrichtung oder Bedienfeld ausgebildet ist.

Ein Gehäuse bzw. eine Abdeckung über den Leuchtmitteln kann mindestens im oberen Bereich elastisch oder nachgiebig ausgebildet sein. Dadurch ist es besonders gut möglich, dass diese Oberseite direkt gegen eine Unterseite einer Kochfeldplatte angedrückt ist, ohne dass die Gefahr von Beschädigungen besteht. Hier bietet sich ein Silikonmaterial an, insbesondere transluzentes Silikonmaterial, welches bekanntermaßen sämtliche Funktionen von Gehäuse, Diffusormittel und geschütztem Anliegen in sich vereinigt. Für bestimmte Symbolanzeigen kann die Oberseite des Gehäuses auch lichtdicht geschlossen sein und Ausschnitte in Form eines gewünschten Symbols aufweisen, beispielsweise abstrakte Zeichen, möglicherweise aber auch Buchstaben oder Worte. Zu deren Herstellung kann die Oberseite vollständig abgedeckt oder beschichtet sein. Mittels eines Lasers oder mechanisch können dann ein gewünschtes Symbol oder ein gewünschter Ausschnitt freigelegt werden, der dann von unten von dem mindestens einen Leuchtmittel durchstrahlt wird und somit leuchtet.

Ein weiterer Vorteil der länglichen Ausbildung des Topferkennungssensors bzw. der Luftspule liegt darin, dass nicht nur sozusagen ein digitales Signal erzeugt werden kann an einem Punkt, das aussagt, ob eine Überdeckung durch ein Kochgefäß vorliegt oder nicht. Vielmehr kann damit eine Art analoges Signal erreicht werden bzw. vorliegen, aus dem zu entnehmen ist, mit welchem Anteil der Fläche und somit insbesondere der Länge der Luftspule eine Überdeckung durch ein Kochgefäß vorliegt. Dies kann eine erheblich bessere Lokalisierung des aufgestellten Kochgefäßes ermöglichen, wie sie ansonsten nur durch eine sehr große Anzahl von kleinen bzw. punktförmigen Topferkennungssensoren möglich wäre. Ein solches Signal kann die Unterscheidung von fünf bis zehn Stufen bzw. Abstufungen ermöglichen.

Es kann vorgesehen sein, dass über einer Induktionsheizspule, insbesondere über deren Mittelpunkt oder Mittelbereich, kein Topferkennungssensor vorgesehen ist. Hier kann die Topferkennung durch die Induktionsheizspule selbst auf bekannte Art und Weise durchgeführt werden. Diese Information kann zusammen mit der Information der Topferkennungssensoren gut verarbeitet werden.

Ein elektrischer Anschluss an die Luftspule des Topferkennungssensors kann über einen Anschlussstecker an der Seite erfolgen. Ein Anschluss kann gemeinsam auch für an dem Topferkennungssensor angebrachte Leuchtmittel vorgesehen werden, wodurch sich der Aufwand an Bauteilen und bei der Montage reduzieren kann.

Ein Topferkennungssensor kann an einem Tragblech für Induktionsheizspulen des Induktionskochfelds befestigt werden, beispielsweise in entsprechende Ausnehmungen eingerastet werden. Dafür können vor allem elastische Eigenschaften eines elastischen Materials für das Gehäuse bzw. die Abdeckung verwendet werden.

In einer möglichen alternativen grundsätzlichen und vorteilhaften Ausgestaltung der Erfindung ist lediglich eine längliche und schmale Beleuchtungseinrichtung für ein Kochfeld vorgesehen, die zwischen zwei Induktionsheizspulen verläuft. Für deren Leuchtmittel kann ein elastisches Gehäuse oder zumindest eine Abdeckung vorgesehen sein, so dass keine Beschädigung auftreten kann, wenn die Beleuchtung an einer Unterseite der Kochfeldplatte anliegt oder angedrückt ist. Des Weiteren können eine elastische Abdeckung oder ein elastisches Gehäuse transluzent ausgebildet sein, insbesondere aus Silikon oder weichem Kunststoffmaterial, um beim Durchstrahlen mit einzelnen Leuchtmitteln, die punktförmig leuchten, wie beispielsweise LED, dennoch eine möglichst gleichmäßige Leuchterscheinung zu erreichen. Die Abdeckung bzw. das Gehäuse können für sich genommen wiederum ausgebildet und angeordnet sein wie zuvor beschrieben, ebenso können sie einen zuvor beschriebenen Träger aufweisen. Eine solche Beleuchtungseinrichtung muss also kein Topferkennungssensor sein mit einer vorgenannten Luftspule, sie dient nur der Beleuchtung.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelnen Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine Draufsicht auf ein Induktionskochfeld gemäß der Erfindung mit abgenommener Kochfeldplatte,
- Fig. 2: eine Seitenansicht eines Ausschnitts eines erfindungsgemäßen Induktionskochfelds mit einem erfindungsgemäßen Topferkennungssensor,
- Fig. 3: eine aufgeschnittene Ansicht des Topferkennungssensors aus Fig. 2 von oben mit Sicht auf die Leuchtmittel samt Ansteuerung,
- Fig. 4: eine Darstellung nur der Oberseite bzw. Abdeckung eines Gehäuses des Topferkennungssensors aus Fig. 2,
- Fig. 5: eine alternative Anordnung eines etwas anders ausgebildeten Topferkennungssensors an einem etwas anders ausgebildeten Tragblech eines Induktionskochfelds,
- Fig. 6: das Induktionskochfeld aus Fig. 1 mit in verschiedenen Positionen aufgesetzten unterschiedlich großen Töpfen,
- Fig. 7: eine Schrägansicht einer nochmals weiteren Ausgestaltung einer Möglichkeit zur Befestigung eines Topferkennungssensors an einem Tragblech und
- Fig. 8: eine Draufsicht auf einen Ausschnitt in dem Tragblech aus Fig. 7, in dem ein Befestigungsschuh eines Gehäuses des Topferkennungssensors befestigt werden kann.

### Detaillierte Beschreibung der Ausführungsbeispiele

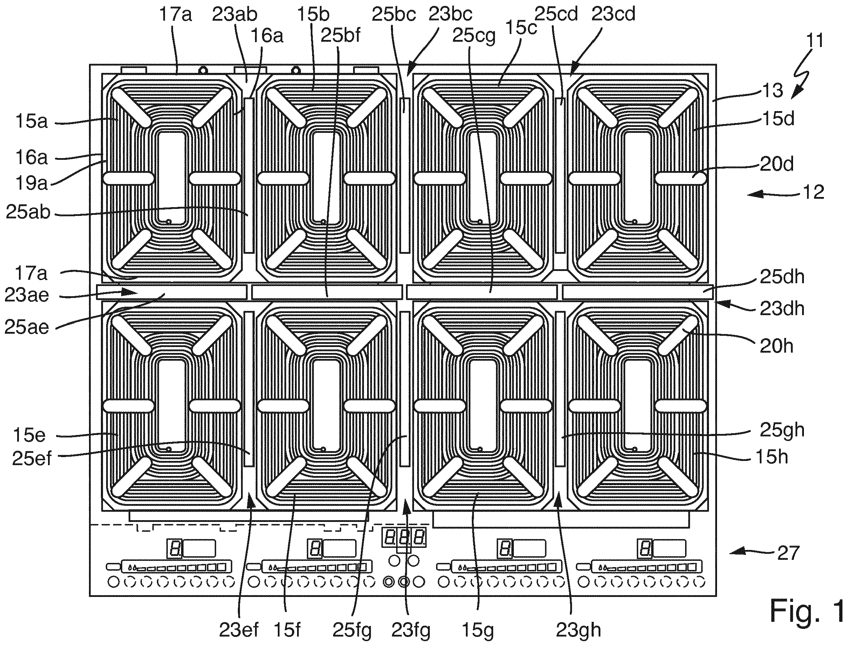

In der Fig. 1 ist ein erfindungsgemäßes Induktionskochfeld 11 in der Draufsicht gezeigt, allerdings mit abgenommener bzw. ohne Kochfeldplatte, also sozusagen ein Unterbau 12. Dieser Unterbau 12 kann, wie hier gezeigt, im Wesentlichen wie üblich mit einer Kochfeldplatte verbunden werden. Dazu weist der Unterbau 12 ein Tragblech 13 auf, das mit Halterungen odgl. dann eben mit der Kochfeldplatte verbunden wird.

Auf der Trägerplatte 13 sind acht im Wesentlichen rechteckige Induktionsheizspulen 15a bis 15h angeordnet. Die Induktionsheizspulen 15 sind sämtlich identisch ausgebildet und gleich ausgerichtet, wie zumindest in ihrem Mittelbereich an der Abführung einer jeweiligen Spulenwindung 19a bis 19h nach unten zum elektrischen Anschluss erkannt werden kann. Die Induktionsheizspule 15a weist jeweils lange Seiten 16a und kurze Seiten 17a auf. An den Ecken ist sie etwas abgerundet wegen der besseren Führung der äußeren Spulenwindung 19, da diese nicht abgeknickt werden sollte. Dennoch sollen Induktionsheizspulen mit dieser Form im Folgenden als rechteckig oder zumindest angenähert rechteckig angesehen werden wie eingangs erläutert. Das gilt für alle Induktionsheizspulen 15a bis 15h.

Oberhalb der Induktionsheizspulen 15a bis 15h sind Abstandshalter 20a bis 20h vorgesehen, die aus Mikanit oder Silikon bestehen können. Darunter können vorteilhaft wie üblich Ferrite angebracht sein. Die Spulenwindungen selbst sind auf Spulenträgern aufgebracht, und diese Spulenträger sind dann wiederum auf dem Tragblech 13 angeordnet.

Es ist zu erkennen, dass die Induktionsheizspulen 15a bis 15h zu ihren benachbarten Spulen jeweils einen gewissen Abstand aufweisen, der in der Praxis 1 cm bis 3 cm oder sogar 5 cm betragen kann, wobei eher geringere Abstände bevorzugt werden. Dadurch bilden sich Nachbarbereiche 23, und zwar zum Einen Nachbarbereiche zwischen langen Seiten 16 der Induktionsheizspulen, nämlich die Nachbarbereiche 23ab, 23bc, 23cd, 23ef, 23fg und 23gh. Diese Nachbarbereiche 23 sind sämtlich gleich breit und gleich lang. Zum Anderen bilden die Induktionsheizspulen 15 an ihren zueinander hin weisenden bzw. benachbarten kurzen Seiten 17 weitere Nachbarbereiche, nämlich die Nachbarbereiche 23ae, 23bf, 23cg und 23dh. Auch diese vier Nachbarbereiche sind jeweils gleich lang und gleich breit.

In den Nachbarbereichen 23 sind Topferkennungssensoren 25 angeordnet. Diese Topferkennungssensoren 25 sind wie eingangs beschrieben ausgebildet, dies wird nachfolgend auch noch näher erläutert. In den langen Nachbarbereichen ist jeweils ein solcher Topferkennungssensor 25 angeordnet, nämlich die Topferkennungssensoren 25ab, 25bc und 25cd in den oberen drei langen Nachbarbereichen 23ab, 23bc und 23cd. In den drei unteren langen Nachbarbereichen 23ef, 23fg und 23gh sind es die Topferkennungssensoren 25ef, 25fg und 25gh. Bei diesen in den langen Nachbarbereichen angeordneten Topferkennungssensoren 25 ist zu erkennen, dass sie jeweils genau in der Mitte der Nachbarbereiche 23 bzw. genau zwischen den benachbarten Induktionsheizspulen 15 oder deren langen Seiten 16 angeordnet sind. Die Topferkennungssensoren 25 überlappen die Induktionsheizspulen 15 nicht, und noch nicht einmal deren Spulenträger.

In den kurzen Nachbarbereichen 23ae, 23bf, 23cg und 23dh sind ebenfalls Topferkennungssensoren 25ae, 25bf, 25cg und 25dh angeordnet. Auch diese sind genau entlang einer Mittellängsachse der kurzen Nachbarbereiche angeordnet und überlappen die jeweils obere und die jeweils untere Induktionsheizspule 15 nicht. Diese Topferkennungssensoren 25ae, 25bf, 25cg und 25dh weisen einen sehr geringen Abstand zueinander auf. Dies hat sich im Rahmen der Erfindung als vorteilhaft für die Erfassung von aufgestellten Töpfen erwiesen.

Des Weiteren sind die Topferkennungssensoren 25ab, 25bc und 25cd in den oberen langen Nachbarbereichen 23ab, 23bc und 23cd etwas weiter von einer horizontalen Spiegelachse durch die Topferkennungssensoren 25ae, 25bf, 25cg und 25dh entfernt als die Topferkennungssensoren 25ef, 25fg und 25gh in den unteren langen Nachbarbereichen 23ef, 23fg und 23gh. Dieser Unterschied kann wenige cm betragen, ist aber deutlich. Die Verschiebung kann einige cm betragen, beispielsweise 1 cm bis 5 cm. Eine solche Verschiebung kann vorgesehen sein, muss aber nicht. Sie kann auch anders herum sein. Die vertikal verlaufenden Topferkennungssensoren 25ab, 25bc, 25cd, 25ef, 25fg und 25gh könnten auch fast bis an die horizontal verlaufenden Topferkennungssensoren 25ae, 25bf, 25cg und 25dh heranreichen.

Sämtliche Topferkennungssensoren 25 sind mit einer hier nicht dargestellten Steuerung des Induktionskochfelds 11 verbunden. Ein Verfahren zu ihrer Ansteuerung wird im Folgenden noch erläutert. Im vorderen Bereich weist das Induktionskochfeld 11 einen Bedienbereich 21 auf mit Anzeigen und Bedienelementen zur Leistungseinstellung für Kochstellen, die auf verschiedene Art und Weise von einer oder mehreren Induktionsheizspulen 15 gebildet werden. Hier kann die nicht dargestellte Steuerung des Induktionskochfelds 11 angeordnet sein zusammen mit Bauteilen für die Bedienelementen bzw. eine Leistungseinstellung.

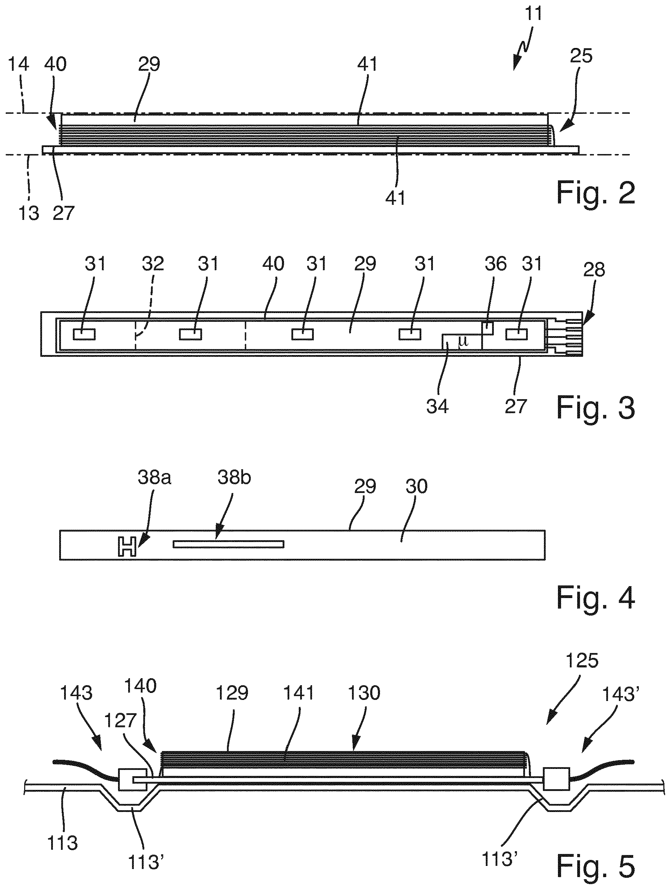

In der Fig. 2 ist in einem Ausschnitt ein Teil eines erfindungsgemäßen Induktionskochfelds 11 von der Seite dargestellt mit einem Topferkennungssensor 25. Dieser Topferkennungssensor 25 liegt auf einem gestrichelt dargestellten Tragblech 13 auf. Mit seiner Oberseite liegt er an der Unterseite einer strichpunktiert dargestellten Kochfeldplatte 14 an.

Wie auch aus den Fig. 3 und 4 hervorgeht, weist der Topferkennungssensor 25 eine längliche schmale und flache Leiterplatte 27 auf. Sie kann eine Länge im eingangs genannten Bereich aufweisen, beispielsweise 15 cm bis 25 cm, und eine Breite zwischen 1 cm und 3 cm. Auf der Leiterplatte 27 als Träger des Topferkennungssensors 25 sind im rechten Bereich fünf Kontaktfelder 28 vorgesehen, insbesondere als übliche kupferne Leiterbahnen ausgebildet. Sie dienen einem elektrischen Kontakt, der bevorzugt als sogenannter Platinen-Randstecker ausgebildet sein kann. Vor allem aber ist auf der Leiterplatte 27 als Träger des Topferkennungssensors 25 ein Gehäuse 29 angeordnet, das direkt auf die Leiterplatte 27 aufgesetzt ist und auch darauf bzw. daran befestigt ist. Das Gehäuse 29 ist länglich und rechteckig, wobei es etwas schmaler und etwas kürzer ist als die Leiterplatte 27. Das Gehäuse 29 mit einer Oberseite 30 kann im Prinzip aus beliebigem Material bestehen, vorteilhaft aus Kunststoff bzw. aus Silikon. Es sollte an den Seiten lichtundurchlässig sein, entweder aus lichtundurchlässigem Material bestehen oder lichtundurchlässig beschichtet sein an der Innenseite und/oder der Außenseite. Auch an der Oberseite 30 kann das Gehäuse 29 zumindest teilweise lichtundurchlässig sein. Dies wird nachfolgend noch näher erläutert.

In dem zumindest teilweise hohlen Gehäuse 29 sind mehrere LED 31 vorgesehen, die auf der Leiterplatte 27 bestückt und damit auch elektrisch angeschlossen sind. Zwischen einzelnen LED 31 können Abtrennungen 32 vorgesehen sein, die hier gestrichelt dargestellt sind. Sie bilden getrennte Lichtkanäle für einzelne LED 31 aus, so dass an dem Topferkennungssensor 25 nicht nur insgesamt eine Beleuchtung mit allen LED 31 eingeschaltet und ausgeschaltet werden kann, sondern einzelne Bereiche gezielt mit ein oder zwei LED 31 beleuchtet werden können. Rechts in der Fig. 3 sind auf der Leiterplatte 27 ein Bus-Controller 34 und ein Temperatursensor 36 dargestellt. Der Bus-Controller 34 dient der Kommunikation bzw. Ansteuerung sämtlicher auf dem Träger angeordneter elektrischer Bauteile. Der Temperatursensor 36 ist hier nicht näher dargestellt, kann aber vorteilhaft ein Widerstandssensor, beispielsweise ein PT1000, oder ein Thermoelement sein. Der Temperatursensor 36 kann nach unten die Temperatur am Tragblech 13 erfassen. Alternativ kann er nach oben an einer Unterseite der Kochfeldplatte 14 oder an der Oberseite 30 des Gehäuses 29 eine Temperatur erfassen. Hierfür ist er jeweils vorteilhaft entsprechend ausgebildet, was für den Fachmann aber keinerlei Problem darstellt. Der Temperatursensor 36 könnte auch außerhalb des Gehäuses 29 auf der Leiterplatte 27 vorgesehen sein, alternativ kann er oben am Gehäuse 29 angeordnet sein, beispielsweise mittels eines kurzen Kabels oder Folienleiters. Der Temperatursensor 36 kann zusätzlich oder alternativ auch zur Temperaturerfassung der LED 31 oder des Bus-Controllers 34 verwendet werden und damit zur Überwachung einer maximal zulässigen Arbeitstemperatur für diese dienen. In seltenen Fällen könnten die LED 31 sogar abgeschaltet werden, wenn ihre spezifizierte Arbeitstemperatur überschritten wird. Alternativ kann eine Heizleistung in diesem Bereich reduziert werden. Diese Maßnahme erhöht bzw. stellt die Lebensdauer der LED 31 sicher.

Wie in der Fig. 4 zu ersehen ist, weist die Oberseite 30 des Gehäuses 29 unterschiedlich ausgebildete Ausschnitte 38a und 39b auf. Der Ausschnitt 38a ist als Buchstabe "H" ausgebildet und kann beispielsweise als Symbol für eine Heißanzeige beleuchtet werden. Der Ausschnitt 38b ist ein länglicher Schlitz bzw. ist länglich und schmal ausgebildet. So kann ein entsprechender leuchtender Strich unter der Kochfeldplatte 14 erzeugt werden, der durch diese Kochfeldplatte 14 hindurch sichtbar ist. Ein solcher Strich könnte sich auch über die wesentliche oder die gesamte Länge der Oberseite 30 hinziehen, um beispielsweise beim Induktionskochfeld gemäß Fig. 1 die Induktionsheizspulen entsprechend optisch voneinander abzutrennen, um einer Bedienperson anzuzeigen, wie die einzelnen Kochzonen ungefähr verlaufen. Je nach Aktivierung der LED 31 kann dies dann angezeigt werden.

Für die Beleuchtung kann vorgesehen sein, dass zumindest die Oberseite 30, möglicherweise sogar das gesamte Gehäuse 29, aus einem Kunststoff oder aus einem Material besteht, das an sich lichtdurchlässig ist, aber nur transluzent ist bzw. nur diffuses Licht erzeugt. So kann es gleichzeitig ein vorteilhaft vorgesehenes Diffusormittel bilden, welches eine Leuchterscheinung der eher punktförmigen LED 31 auf bekannte Art und Weise vergleichmäßigt. An den Seiten kann das Gehäuse 29 dann lichtundurchlässig beschichtet sein, entweder innen oder außen. An der Oberseite 30 kann dies ebenfalls der Fall sein, wobei entweder bei einem Beschichtungsvorgang selbst die Ausschnitte 38a und 38b freigelassen werden. Alternativ kann eine vollflächige Beschichtung erfolgen, wobei später dann die Ausschnitte 38a und 38b sowie weitere mögliche und gewünschte Ausschnitte herausgearbeitet werden, beispielsweise herausgelasert werden. Dies kann unter Umständen sogar auch nach einer Bestückung des Induktionskochfelds 11 mit den Topferkennungssensoren 25 in einem Zustand entsprechend Fig. 1 erfolgen. Somit können sozusagen generische und allgemeine Topferkennungssensoren eingebaut werden, und ihre Individualisierung bzw. Bearbeitung für unterschiedliche Leuchtwirkung erfolgt dann erst im eingebauten Zustand.

Vor allem aber ist aus den Fig. 2 und 3 zu entnehmen, wie am Topferkennungssensor 25 eine Luftspule 40 mit mehreren Windungen 41 angebracht ist, und zwar sind diese Windungen 41 direkt außen auf das Gehäuse 29 aufgewickelt. Die einzelnen Windungen 41 können, wie hier dargestellt ist, relativ weit unten am Gehäuse 29 bzw. nahe zum Träger 27 vorgesehen sein. Alternativ können sie auch mittig oder ganz oben verlaufen, wie die Fig. 5 dies andeutet.

Die Luftspule 40 ist vorteilhaft einlagig auf das Gehäuse 29 aufgewickelt, beispielsweise mit den vorgenannten zehn bis vierzig Windungen. Die Luftspule 40 ist vorteilhaft aus isoliertem Kupferdraht aufgebaut. Sie kann auch zweilagig aufgewickelt sein, falls genügend Platz vorhanden ist oder falls die Luftspule möglichst gesamtheitlich oben am Gehäuse 29 nahe zur Kochfeldplatte 14 angeordnet sein soll.

Zum erleichterten Aufwickeln können außen am Gehäuse 29 nicht dargestellte Hilfsmittel vorgesehen sein, beispielsweise ein abstehender umlaufender Absatz, der als Untergrenze und/oder als Obergrenze für eine Bewicklung dienen kann. Bildet ein solcher Absatz eine Untergrenze, so kann auch gleichzeitig verhindert werden, dass die Windungen 41 der Luftspule 40 nach unten rutschen und somit ihre Position verändern, was ihre Funktion stark negativ beeinträchtigen würde.

Die Luftspule 40 kann mit dem Bus-Controller 34 verbunden sein und somit von außen elektrisch angesteuert und ausgewertet werden. Dies ist an sich leicht vorstellbar und bekannt und braucht hier nicht näher erläutert zu werden.

Bei dem Ausführungsbeispiel des Topferkennungssensors 25 der Fig. 2 bis 4 kann die Leiterplatte 27 grundsätzlich beliebig auf dem Tragblech 13 positioniert werden. Eine Fixierung kann durch Verkleben erfolgen, alternativ durch Ausnehmungen in der Leiterplatte 27, die auf Vorsprünge im Tragblech 13 aufgesteckt werden. Ebenso können am Topferkennungssensor 25 Vorsprünge nach unten vorgesehen sein, die in Ausnehmungen im Tragblech 13 eingreifen.

In der alternativen Ausgestaltung eines Topferkennungssensors 125 der Fig. 5 ist dargestellt, wie an beiden Enden der Leiterplatte 127 Anschlüsse aufgesteckt sind. Links ist dies ein Anschlussstecker 143, der sozusagen offen U-förmig ist. Somit braucht er nur in etwa so breit zu sein wie die Leiterplatte 127 selbst oder kann sogar etwas schmaler sein. Rechts ist ein Anschlussstecker 143' aufgesteckt, der die Leiterplatte 127 in der Breite etwas überragt. So kann er stabiler aufgesteckt sein.

Im Tragblech 113, auf welches der Topferkennungssensor 125 aufgelegt ist, sind unterhalb der Anschlussstecker 143 und 143' Ausnehmungen 113' vorgesehen, hier ausgebildet als Vertiefungen bzw. Ausprägungen nach unten. So wird ausreichend Platz für die Anschlussstecker 143 bzw. 143' geschaffen. Diese können sogar so ausgebildet sein, dass sie sozusagen formschlüssig in den Ausnehmungen 113' liegen und somit ein Verschieben des Topferkennungssensors 125 verhindern können.

Aus der Fig. 5 ist auch zu ersehen, wie eine Luftspule 140 mit ihren Windungen 141 außen auf die Seitenwände des Gehäuses 129 gewickelt ist. Hier ist die Luftspule 140 relativ weit oben angeordnet, also nahe zu einer Oberseite 130 des Gehäuses 129. Damit kann sie näher an einer Unterseite einer Kochfeldplatte liegen und somit auch näher an einem auf die Kochfeldplatte aufgesetzten Kochgefäß, wodurch dieses besser erkannt werden kann.

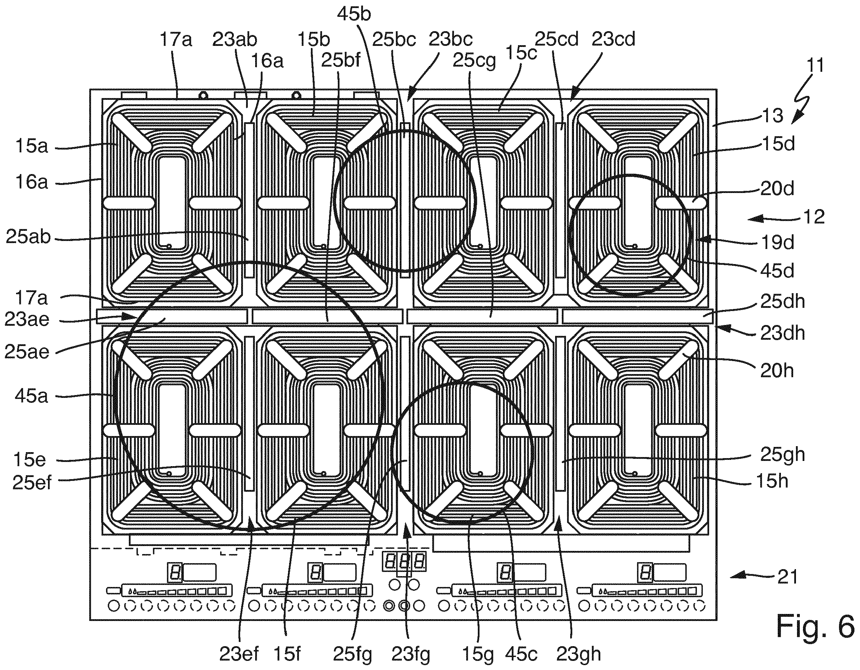

In der Fig. 6 sind vier verschiedene Töpfe 45a bis 45d auf das Induktionskochfeld 11 der Fig. 1 aufgesetzt. Hier zeigt sich der große Vorteil der Ausgestaltung der Topferkennungssensoren 25 als schmal und länglich zwischen den Induktionsheizspulen 15.

Der sehr große Topf 45a links vorne ist mit seiner Vorderkante nahezu ganz vorne an einer Vorderkante eines Heizbereichs und kurz vor dem Bedienbereich 21. Er überdeckt die Induktionsheizspulen 15e und 15f zu einem großen Teil. Den Topferkennungssensor 25ef überdeckt er vollständig, die Topferkennungssensoren 25ae und 25bf jeweils zu etwa 70 %. Den Topferkennungssensor 25ab überdeckt er nur zu 10 %, ähnlich die Induktionsheizspulen 15a und 15b.

Der große Vorteil der länglichen Ausgestaltung der Topferkennungssensoren samt deren ähnlich langen Luftspulen 40 liegt nun darin, dass diese die drei vorgenannten unterschiedlichen Bedeckungsgrade unterscheiden können, sozusagen als vorgenanntes analoges Signal. Aufgrund der großen Länge der Topferkennungssensoren 25 ist es erwartbar, dass größere Töpfe oder nicht ganz korrekt aufgesetzte Töpfe zu Teilüberdeckungen führen. Während also der Topferkennungssensor 25ef ein Signal entsprechend einer vollen Überdeckung liefert, also volle Signalstärke, liefern die Topferkennungssensoren 25ae und 25bf ein Signal, das etwas geringer ist als dasjenige des Topferkennungssensors 25ef. Es beträgt aber dennoch etwa die Hälfte davon oder sogar noch etwas mehr.

Am Topferkennungssensors 25ab kann erkannt werden, dass eine geringfügige Bedeckung vorliegt, die aber wirklich nur geringfügig ist und deutlich unterhalb der vorgenannten 50 % Überdeckung liegt. Ähnliches kann auch an den Induktionsheizspulen 15a und 15b erfasst werden.

Anhand dieser Informationen kann eine Steuerung des Induktionskochfelds 11, vorteilhaft angeordnet im Bedienbereich 21, in etwa Größe und Position des Topfes 45a berechnen bzw. bestimmen. Mit kleinen Topferkennungssensoren aus dem Stand der Technik entsprechend der eingangs genannten EP 3026981 A1 wäre dies nicht so gut möglich bzw. es müssten erheblich mehr Topferkennungssensoren verwendet werden als die hier dargestellten zehn Topferkennungssensoren. Dadurch ist deren Aufbau, Anordnung und Auswertung komplizierter.

Der hintere kleinere Topf 45b überdeckt den Topferkennungssensor 45bc vollständig. Dieser liefert also ein maximal starkes Signal einer Überdeckung. Die Induktionsheizspulen 15b und 15c registrieren zwar auch, dass ein Topf über ihnen aufgesetzt ist. Sie bestimmen aber eine Überdeckung, die jeweils nur etwa 25 % beträgt. Da die nächsten vorderen Topferkennungssensoren 25bf und 25cg nichts erfassen, kann die Position des Topfs 45b in etwa bestimmt werden, ebenso in etwa seine Größe. Dies mag zwar nicht ganz so genau möglich sein wie bei dem sehr großen Topf 45a, ist aber ausreichend.

Der vordere kleinere Topf 45c überdeckt die Induktionsheizspule 15g zu etwa zwei Drittel. Dies kann die Induktionsheizspule 15g erfassen. Des Weiteren wird der Topferkennungssensor 25fg etwa zur Hälfte überdeckt, was er ebenfalls erfassen kann. Da weder der Topferkennungssensor 25cg noch der Topferkennungssensor 25gh eine Überdeckung durch den Topf 25c oder irgendeinen Topf feststellen können, kann wiederum in etwa bestimmt werden, wie groß der Topf 45d ist und wo er aufgestellt ist. Ansonsten würde er nämlich relativ schnell an den rechts davon gelegenen Topferkennungssensor 25gh geraten bzw. diesen überdecken.

Der sehr kleine Topf 45d ist hinten rechts auf die Induktionsheizspule 15d gestellt, die er zu etwa 40 % überdeckt. Dies kann sie erfassen. Da die Topferkennungssensoren 25cd und 25dh erfassen können, dass sie nicht überdeckt sind, ist klar, dass der Topf 45d relativ klein sein muss. Gleichzeitig ist er aber ausreichend gut über der Induktionsheizspule 15d aufgestellt, so dass er von dieser homogen beheizt werden kann. Die unter 50 % liegende Bedeckung der Induktionsheizspule 15d liegt noch in einem akzeptablen Rahmen, so dass der Topf 45d gut mittels dieser Induktionsheizspule 15d beheizt werden kann. Dies trifft im Prinzip auch für den Topf 45c über der Induktionsheizspule 15g zu.

Auch der Topf 45a kann gut mittels der Induktionsheizspulen 15e und 15f beheizt werden. Die Induktionsheizspulen 15a und 15b könnten hier schon nicht mehr gut verwendet werden, dazu ist ihre Überdeckung einfach zu gering. Ähnlich ist es auch beim Topf 45b zu sehen, dessen Position mittels des Topferkennungssensors 25bc in etwa bestimmt werden kann. Bei einer hier immer noch zu geringen Bedeckung der Induktionsheizspulen 15b und 15c würde ein Fehler gemeldet werden bzw. ein Heizbetrieb würde nicht beginnen und die Bedienperson würde entsprechend informiert werden und zum Verschieben des Topfs 45b aufgefordert werden.

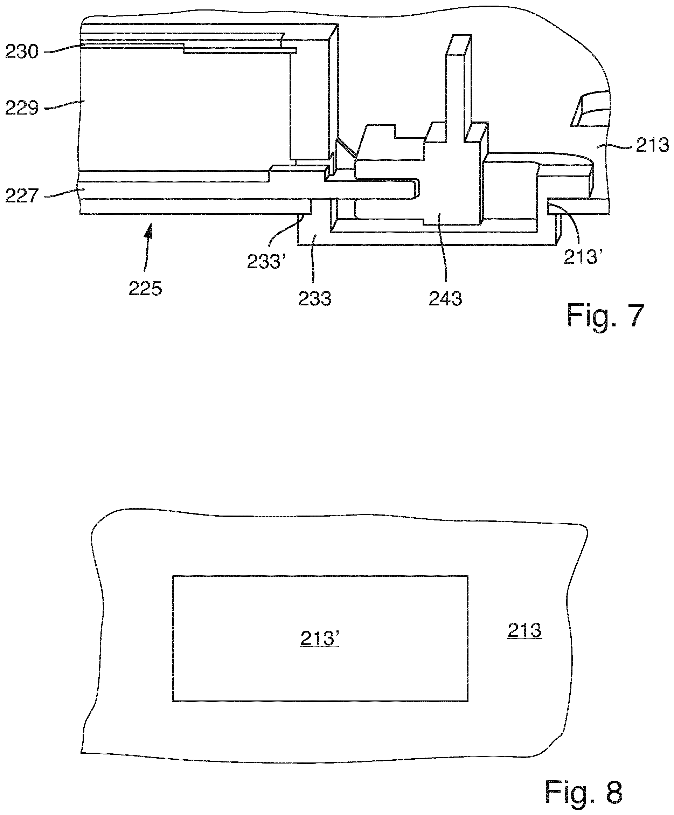

In der Fig. 7 ist in nochmals weiterer Ausgestaltung ein Topferkennungssensor 225 ausschnittsweise dargestellt, bei dem nicht ein kleineres Gehäuse auf einer größeren Leiterplatte angeordnet ist, sondern bei dem eine kleinere Leiterplatte 227 sozusagen in dem größeren Gehäuse 229 angeordnet ist und nur zu einem kleinen Teil heraussteht. Über dieses herausstehende Ende der Leiterplatte 227 ist ein Anschlussstecker 243 aufgesteckt, und zwar können hierfür ähnlich zu Fig. 3 Kontaktfelder an der Leiterplatte 227 vorhanden sein. Um genügend Raum für den Anschlussstecker 243 und auch zur Befestigung des Topferkennungssensors 225 am Tragblech 213 zu schaffen, sind darin Ausschnitte 213' in Rechteckform vorgesehen, wie dies aus der Draufsicht gemäß Fig. 8 zu erkennen ist. Pro Topferkennungssensor 225 kann zwar ein einzelner solcher Ausschnitt 213' ausreichen, vorteilhaft sind es aber zwei, einer an jedem Ende.

Rechts steht von dem Gehäuse 229 ein vertiefter bzw. nach unten gezogener Befestigungsschuh 233 ab. Dieser weist einen umlaufenden Einschnitt 233' auf. Wenn das Gehäuse 229 hier aus einem sehr elastischen Material wie Silikon odgl. gefertigt ist, so kann der Befestigungsschuh 233 relativ leicht in die Ausnehmung 213' eingedrückt werden, so dass deren umlaufende Ränder in den Einschnitt 233'eingreifen. Somit ist eine formschlüssige Verbindung gegeben, die durch eine elastische Verformung zwar wieder gelöst werden kann, bei Montage und Betrieb des Induktionskochfelds aber ausreichend ist. Der nach oben offene Befestigungsschuh 233 weist auch genügend Platz für den Anschlussstecker 243 auf. Insbesondere kann dieser Anschlussstecker 243 auch erst nachträglich auf die Leiterplatte 227 aufgesteckt werden.

Hier ist bezüglich des Gehäuses 229 noch zu erkennen, dass dieses im oberen Bereich eine separate Oberseite 230 als eine dünne Platte aufweist, die durch Einstecken bzw. Einrasten daran gehaltert ist. Die dünne Platte als Oberseite 230 kann aus transluzentem Material bestehen für Diffusoreigenschaften und entsprechende Ausschnitte aufweisen, durch welche spezielle Lichterscheinungen nach oben erzeugt werden können, wie dies vorstehend erläutert worden ist.

Eine vorgenannte längliche und schmale Beleuchtungseinrichtung als alternative grundsätzliche und vorteilhafte Ausgestaltung der Erfindung könnte ausgebildet sein wie in den Fig. 2 und 3 oder 7 dargestellt, nur eben ohne die Luftspule zur Topferkennung. Sie könnte an einer Oberseite eines Gehäuses auch entsprechend ausgebildete lichtdurchlässige Ausschnitte odgl. aufweisen, vorteilhaft als längliche Schlitze. Somit kann sie bei Beleuchtung derselben die einzelnen Induktionsheizspulen 15 optisch voneinander trennen. Dies kann ein korrektes Aufsetzen von Kochgefäßen erleichtern.

## Patentansprüche

1. Topferkennungssensor (25, 125, 225) für ein Induktionskochfeld (11), wobei der Topferkennungssensor aufweist:
- eine Luftspule (40, 140) mit mindestens zwei Windungen (41, 141),
- einen Träger (27, 127, 227) für die Luftspule,
**dadurch gekennzeichnet, dass** eine Länge der Luftspule (40, 140) mindestens das Fünffache einer Breite der Luftspule beträgt.

2. Topferkennungssensor nach Anspruch 1, **dadurch gekennzeichnet, dass** der Träger (27, 127, 227) flach ist und die Windungen (41, 141) der Luftspule (40, 140) parallel zum Träger verlaufen, wobei vorzugsweise der Träger eben ist.

3. Topferkennungssensor nach Anspruch 1 oder 2, **dadurch gekennzeichnet, dass** die Luftspule (40, 140) und/oder der Träger (27, 127, 227) gerade sind.

4. Topferkennungssensor nach Anspruch 1 oder 2, **dadurch gekennzeichnet, dass** die Luftspule und/oder der Träger gebogen sind, insbesondere teilkreisförmig gebogen ist.

5. Topferkennungssensor nach einem der vorhergehenden Ansprüche, **dadurch gekennzeichnet, dass** die Länge der Luftspule (40, 140) zwischen dem Achtfachen und dem Zwölffachen der Breite der Luftspule beträgt.

6. Topferkennungssensor nach einem der vorhergehenden Ansprüche, **dadurch gekennzeichnet, dass** die Länge der Luftspule (40, 140) maximal 25 cm beträgt und/oder dass die Breite der Luftspule maximal 3 cm beträgt.

7. Topferkennungssensor nach einem der vorhergehenden Ansprüche, **dadurch gekennzeichnet, dass** der Träger (27, 127, 227) zwei gegenüberliegende Flachseiten aufweist und nur auf derjenigen Flachseite mit Bauteilen (31) bestückt ist, auf der die Luftspule (40, 140) angeordnet ist, wobei vorzugsweise die andere Flachseite frei ist von Bauteilen.

8. Topferkennungssensor nach einem der vorhergehenden Ansprüche, **gekennzeichnet durch** einen Temperatursensor (36), vorzugsweise an einer oberen Seite oder an einer unteren Seite des Topferkennungssensors (25, 125, 225).

9. Topferkennungssensor nach einem der vorhergehenden Ansprüche, **gekennzeichnet durch** einen Bus-Controller (34), der auf dem Träger (27, 127, 227) angeordnet ist.

10. Topferkennungssensor nach einem der vorhergehenden Ansprüche, **gekennzeichnet durch** Leuchtmittel (31) auf derselben Flachseite des Trägers (27, 127, 227), auf der auch die Luftspule (40, 140) angeordnet ist, wobei insbesondere die Leuchtmittel (31) von der Luftspule umgeben sind, wobei vorzugsweise über dem mindestens einen Leuchtmittel Diffusormittel (29) angeordnet sind zur Erzeugung einer diffusen Lichterscheinung bzw. zur Vergleichmäßigung einer Leuchtwirkung des mindestens einen Leuchtmittels, wobei insbesondere das Diffusormittel ein Teil eines Gehäuses (29) über dem mindestens einen Leuchtmittel (31) und auch um das mindestens eine Leuchtmittel herum ist oder dieses Gehäuse bildet.

11. Topferkennungssensor nach einem der vorhergehenden Ansprüche, **dadurch gekennzeichnet, dass** die Luftspule (40, 140) mit ihren Windungen (41, 141) um ein Gehäuse (29) oder eine Abdeckung für das mindestens eine Leuchtmittel (31) gewickelt ist, vorzugsweise ein Gehäuse (29) nach Anspruch 10, insbesondere derart gewickelt ist, dass das Gehäuse (29) oder die Abdeckung die Luftspule (40, 140) tragen oder stützen.

12. Topferkennungssensor nach einem der vorhergehenden Ansprüche, **dadurch gekennzeichnet, dass** auf dem Träger mindestens zwei gleiche Luftspulen in Verlängerung zueinander angeordnet sind, insbesondere identische Luftspulen, vorzugsweise mit 1 cm bis maximal 5 cm Abstand zueinander.

13. Induktionskochfeld (11) mit mindestens einem Topferkennungssensor (25, 125, 225) nach einem der vorhergehenden Ansprüche, **dadurch gekennzeichnet, dass** das Induktionskochfeld aufweist:
- eine Kochfeldplatte (14),
- mindestens eine Induktionsheizspule (15) unter der Kochfeldplatte (14),
- mindestens einen Topferkennungssensor (25, 125, 225) entlang einer Außenseite der Induktionsheizspule (15).

14. Induktionskochfeld nach Anspruch 13, **dadurch gekennzeichnet, dass** der Topferkennungssensor (25, 125, 225) weder die Fläche der Induktionsheizspule (15) noch eine der Windungen der Induktionsheizspule überdeckt, insbesondere auch nicht mit seinem Träger (27, 127, 227) überdeckt.

15. Induktionskochfeld nach Anspruch 13 oder 14, **dadurch gekennzeichnet, dass** es mehrere Induktionsheizspulen (15) aufweist, wobei zwischen benachbarten Induktionsheizspulen ein Topferkennungssensor (25, 125, 225) angeordnet ist, insbesondere zwischen genau zwei benachbarten Induktionsheizspulen genau ein einziger Topferkennungssensor, wobei vorzugsweise Topferkennungssensoren nur entlang von denjenigen Längsseiten von Induktionsheizspulen angeordnet sind, die nicht nach außen hin gerichtet sind und die eine benachbarte Induktionsheizspule aufweisen.

## Claims

1. Pot detection sensor (25, 125, 225) for an induction hob (11), wherein said pot detection sensor has:
- an air-core coil (40, 140) with at least two turns (41, 141),
- a carrier (27, 127, 227) for said air-core coil,
**characterized in that**
a length of said air-core coil (40, 140) is at least five times a width of said air-core coil.

2. Pot detection sensor according to claim 1, **characterized in that** the carrier (27, 127, 227) is flat and said turns (41, 141) of said air-core coil (40, 140) run parallel to said carrier, wherein preferably the carrier is planar.

3. Pot detection sensor according to claim 1 or 2, **characterized in that** the air-core coil (40, 140) and/or the carrier (27, 127, 227) is straight.

4. Pot detection sensor according to claim 1 or 2, **characterized in that** the air-core coil and/or the carrier is bent, in particular is bent in a partial circular shape.

5. Pot detection sensor according to any of the preceding claims, **characterized in that** the length of said air-core coil (40, 140) is between eight times and twelve times said width of said air-core coil.

6. Pot detection sensor according to any of the preceding claims, **characterized in that** the length of said air-core coil (40, 140) is at most 25 cm and/or **in that** the width of the air-core coil is at most 3 cm.

7. Pot detection sensor according to any of the preceding claims, **characterized in that** the carrier (27, 127, 227) has two opposite flat sides, and is provided with components (31) merely on that flat side on which said air-core coil (40, 140) is arranged, wherein preferably the other flat side is free of components.

8. Pot detection sensor according to any of the preceding claims, **characterized by** a temperature sensor (36), preferably on a top side of said pot detection sensor or on a bottom side of said pot detection sensor (25, 125, 225).

9. Pot detection sensor according to any of the preceding claims, **characterized by** a bus controller (34) which is arranged on said carrier (27, 127, 227).

10. Pot detection sensor according to any of the preceding claims, **characterized by** lighting means (31) on said same flat side of the carrier (27, 127, 227) on which said air-core coil (40, 140) is also arranged, wherein in particular the lighting means (31) are surrounded by said air-core coil, wherein preferably diffusor means (29) are arranged over said at least one lighting means for a purpose of generating a diffuse light phenomenon or for equalizing a lighting effect of said at least one lighting means, wherein in particular the diffusor means is a portion of a housing (29), which is formed over said at least one lighting means (31) and also around said at least one lighting means, or is said housing.

11. Pot detection sensor according to any of the preceding claims, **characterized in that** the air-core coil (40, 140), by way of its turns (41, 141), is wound around a housing (29) or around a cover for said at least one lighting means (31), preferably a housing (29) according to claim 10; in particular said air-core coil is wound in such a way that said housing (29) or said cover carry or support said air-core coil (40, 140).

12. Pot detection sensor according to any of the preceding claims, **characterized in that** at least two identical air-core coils are arranged in an extension to one another on said carrier, in particular identical air-core coils, preferably at a distance of 1 cm to at most 5 cm from one another.

13. Induction hob (11) comprising at least one pot detection sensor (25, 125, 225) according to any of the preceding claims, **characterized in that** the induction hob has:
- a hob plate (14),
- at least one induction heating coil (15) beneath said hob plate (14),
- at least one pot detection sensor (25, 125, 225) along an outer side of said induction heating coil (15).

14. Induction hob according to claim 13, **characterized in that** the pot detection sensor (25, 125, 225) does not overlap neither the surface of said induction heating coil (15) nor one of said turns of said induction heating coil, in particular does also not overlap by way of its carrier (27, 127, 227).

15. Induction hob according to claim 13 or 14, **characterized in that** it has a plurality of induction heating coils (15), wherein one pot detection sensor (25, 125, 225) is arranged between adjacent induction heating coils, in particular precisely one single pot detection sensor is arranged between precisely two adjacent induction heating coils, wherein preferably pot detection sensors are arranged only along those longitudinal sides of induction heating coils which are not directed toward an outside and which have an adjacent induction heating coil.

## Revendications

1. Capteur de détection de récipient (25, 125, 225) pour une table de cuisson à induction (11), dans lequel le capteur de détection de récipient comprend :
- un self à air (40, 140) avec au moins deux spires (41, 141),
- un support (27, 127, 227) pour le self à air,
**caractérisé en ce que**
une longueur du self à air (40, 140) est au moins cinq fois une largeur du self à air.

2. Capteur de détection de récipient selon la revendication 1, **caractérisé en ce que** le support (27, 127, 227) est plat et les spires (41, 141) du self à air (40, 140) s'étendent parallèlement au support, dans lequel de préférence le support est plan.

3. Capteur de détection de récipient selon la revendication 1 ou 2, **caractérisé en ce que** le self à air (40, 140) et/ou le support (27, 127, 227) sont droits.

4. Capteur de détection de récipient selon la revendication 1 ou 2, **caractérisé en ce que** le self à air et/ou le support sont courbés, en particulier courbés sous forme de cercle partiel.

5. Capteur de détection de récipient selon l'une quelconque des revendications précédentes, **caractérisé en ce que** la longueur du self à air (40, 140) est comprise entre huit fois et douce fois la largeur du self à air.

6. Capteur de détection de récipient selon l'une quelconque des revendications précédentes, **caractérisé en ce que** la longueur du self à air (40, 140) est 25 cm au maximum et/ou **en ce que** la largeur du self à air est 3 cm au maximum.

7. Capteur de détection de récipient selon l'une quelconque des revendications précédentes, **caractérisé en ce que** le support (27, 127, 227) présente deux côtés plats opposés et est pourvu de composants (31) seulement sur le côté plat où le self à air (40, 140) est arrangé, dans lequel de préférence l'autre côté plat est dépourvu de composants.

8. Capteur de détection de récipient selon l'une quelconque des revendications précédentes, **caractérisé par** un capteur de température (36), de préférence sur une face supérieure ou sur une face inférieure du capteur de détection de récipient (25, 125, 225).

9. Capteur de détection de récipient selon l'une quelconque des revendications précédentes, **caractérisé par** un contrôleur de bus (34) arrangé sur le support (27, 127, 227).

10. Capteur de détection de récipient selon l'une quelconque des revendications précédentes, **caractérisé par** agents lumineux (31) sur le même côté plat du support (27, 127, 227) où le self à air (40, 140) est arrangé aussi, dans lequel en particulier les agents lumineux (31) sont entourés par le self à air, dans lequel de préférence des moyens de diffuseur (29) sont arrangés au-dessus de l'au moins un agent lumineux pour la production d'un phénomène de lumière diffuse ou pour l'égalisation d'un effet d'illumination de l'au moins un agent lumineux, dans lequel en particulier le moyen de diffuseur est une partie d'un boîtier (29) au-dessus de l'au moins un agent lumineux (31) et aussi entoure l'au moins un agent lumineux ou forme ledit boîtier.

11. Capteur de détection de récipient selon l'une quelconque des revendications précédentes, **caractérisé en ce que** le self à air (40, 140), par ses spires (41, 141), est bobiné autour d'un boîtier (29) ou une couverture pour l'au moins un agent lumineux (31), de préférence un boîtier (29) selon la revendication 10, en particulier est bobiné de telle manière que le boîtier (29) ou la couverture porte ou soutient le self à air (40, 140).

12. Capteur de détection de récipient selon l'une quelconque des revendications précédentes, **caractérisé en ce que** sur le support au moins deux selfs à air pareils sont disposés en prolongement l'un de l'autre, en particulier selfs à air identiques, de préférence espacés l'un de l'autre de 1 cm à 5 cm au maximum.

13. Table de cuisson à induction (11) avec au moins un capteur de détection de récipient (25, 125, 225) selon l'une quelconque des revendications précédentes, **caractérisée en ce que** la table de cuisson à induction comprend :
- une plaque de table de cuisson (14),
- au moins un serpentin de chauffage à induction (15) en-dessous de la table de cuisson (14),
- au moins un capteur de détection de récipient (25, 125, 225) le long d'un côté extérieur du serpentin de chauffage à induction (15).

14. Table de cuisson à induction selon la revendication 13, **caractérisée en ce que** le capteur de détection de récipient (25, 125, 225) ne couvre ni la surface du serpentin de chauffage à induction (15) ni l'une des spires du serpentin de chauffage à induction, en particulier ne couvre non plus avec son support (27, 127, 227).

15. Table de cuisson à induction selon la revendication 13 ou 14, **caractérisée en ce qu'**elle présente une pluralité de serpentins de chauffage à induction (15), dans laquelle entre des serpentins de chauffage à induction adjacents un capteur de détection de récipient (25, 125, 225) est disposé, en particulier entre exactement deux serpentins de chauffage à induction adjacents exactement un seul capteur de détection de récipient, dans laquelle de préférence capteurs de détection de récipient sont arrangés seulement le long de ces côtés longitudinaux de serpentins de chauffage à induction qui ne sont pas orientés vers l'extérieur et qui présentent un serpentin de chauffage à induction adjacent.
